# FASCICULE DE BREVET EUROPEEN

(11) **EP 0 812 084 B1**
(45) Date de publication et mention de la délivrance du brevet: **31.08.2005**
(21) Numéro de dépôt: 97401233.8
(22) Date de dépôt: 03.06.1997
(51) Int. Cl.: H04L 12/413, H04L 12/44

(54) **Dispositif de communication entre une pluralité de modules fontionnels installés dans une unité locale et un bus externe de type ethernet**
Vorrichtung zur Kommunikation zwischen mehreren Funktionsmodulen innerhalb einer lokalen Einheit und einem externen Ethernet-Bus
Device for communication between a plurality of functional modules within a local unit and an external ethernet bus

(30) Priorité: 07.06.1996 FR 9607081
(43) Date de publication de la demande: 10.12.1997
(73) Titulaire: THALES AVIONICS S.A., 78141 Vélizy Villacoublay Cédex (FR)
(72) Inventeur: Toillon, Patrice, Thomson-CSF S.C.P.I, 94117 Arcueil cedex (FR); Colas, Gérard, Thomson-CSF S.C.P.I, 94117 Arcueil cedex (FR); Grand, Thierry, Thomson-CSF S.C.P.I, 94117 Arcueil cedex (FR)
(74) Mandataire: Guérin, Michel

(56) Documents cités:
- EP-A- 0 660 568
- WO-A-83/03179
- WO-A-90/09710

## Description

La présente invention concerne un dispositif de communication entre un ou plusieurs bus externes et un ensemble de modules électroniques installés dans une unité locale, telle qu'une baie électronique.

Elle s'applique notamment, mais non exclusivement, aux équipements électroniques embarqués à bord des aérodynes, ces équipements étant interconnectés par un ou plusieurs bus dits externes. Certains de ces équipements, et notamment les calculateurs, sont intégrés dans des étagères, chaque étagère regroupant un ensemble de modules interconnectés par un bus interne appelé "bus fond de panier".

Etant donné que le nombre d'équipements électroniques interconnectés à bord d'un aérodyne tend à s'accroître, il est nécessaire de pouvoir disposer d'un moyen d'interconnexion réduisant le nombre de liens physiques entre équipements, tout en procurant un débit d'information de plus en plus important. Actuellement on tend vers une solution utilisant un bus multiplexé, multi-émetteur et multi-récepteur, tel que celui défini par la norme aéronautique ARINC 629.

Il s'avère que cette norme implique des mécanismes lourds de détection et de tolérance aux pannes, en liaison avec la criticité des informations échangées, ces mécanismes étant réalisés à l'aide de composants spécifiques de faible diffusion, donc coûteux. Cette norme implique également des débits insuffisants (2 Mbits/s) lorsqu'il s'agit d'effectuer des opérations de maintenance comme par exemple, des opérations de téléchargement de logiciel.

On connaît par ailleurs la norme IEEE 802.3 mise en oeuvre par exemple dans les réseaux locaux de type Ethernet, qui a été conçue pour les communications à plus haut débit (10 Mbits/s) entre calculateurs, non pas spécifiquement pour le domaine aéronautique, mais pour des applications dans le domaine de l'informatique en général. Les composants utilisés pour ces communications sont donc de plus large diffusion, de plus haut niveau d'intégration et plus simples puisque ce type de communications met en oeuvre un protocole simple qui n'est pas soumis à des contraintes aussi sévères en matière de détection et de tolérance aux pannes.
Il est donc avantageux d'appliquer cette norme aux communications entre unités fonctionnelles connectées au bus externe.

Toutefois, cette norme a été conçue pour des communications sur des distances de quelques mètres à quelques centaines de mètres, et non pas pour des communications entre modules espacés de quelques centimètres dans une baie ou étagère électronique.

En outre, cette norme applique le principe CSMA/CD (Carrier Sense Mode Access / Collision Detection) qui consiste à écouter avant d'émettre, et à émettre uniquement lorsque la voie est libre, l'état de la voie étant déterminé par détection de la porteuse. En cas de collision, c'est-à-dire lorsque plusieurs émetteurs commencent à émettre en même temps, chaque émetteur attend pendant un délai de durée aléatoire avant d'effectuer une nouvelle tentative d'émission.
Ainsi, à partir d'une certaine fréquence de requêtes d'émission, le nombre de collisions augmente, ce qui entraîne un écroulement du débit moyen de la liaison.

Il s'avère par ailleurs que les besoins en terme de débit de transmission entre les modules d'une même étagère sont très importants et peuvent dépasser la capacité instantanée d'une seule liaison de type ARINC 629 ou Ethernet. On a donc mis au point la norme ARINC 659 qui définit un bus haut débit (60 Mbits/s), redondant, également multi-émetteur et multi-récepteur multiplexé.
Cependant, les transmissions à de tels débits sont très sensibles aux perturbations électromagnétiques, et font de ce fait appel à des technologies coûteuses.

En outre, si l'on utilise des protocoles différents sur le bus externe et le bus interne à une étagère, les formats de données et les débits respectifs de ces bus sont différents. Ces bus sont donc asynchrones entre eux. Les modules de couplage assurant l'interconnexion entre le bus externe et les modules de l'étagère introduisent alors inévitablement un temps de retard dans la transmission des informations, et doivent mettre en oeuvre une manipulation des informations qui réduit la fiabilité de l'ensemble du système de communication.

Le document EP-A-0 660 568 concerne la communication entre des éléments d'un groupement et un bus externe de type Ethernet auquel ce groupement est connecté. Les éléments du groupement sont reliés entre eux par un bus interne commun et à quatre fils, ce dernier ayant seul l'accès au bus externe par l'intermédiaire d'un élément de couplage. Le bus interne commun nécessite une gestion des collisions.

Le document WO-A-83/03179 est relatif à un dispositif de communication entre éléments réunis par groupes qui comprend des bus de type Ethernet externes aux groupes, redondants et auquel chaque groupe est relié par des modules de contrôle gérant de plus les collisions de transmissions locales au groupe.

Le document WO-A-90/09710 est relatif à un connecteur pour noeud d'un réseau en étoile. Ce connecteur gère les communications entre les branches du noeud : sur chaque branche le connecteur est émetteur et récepteur et ces deux fonctions ne sont pas simultanées.

La présente invention a pour but de supprimer ces inconvénients. A cet effet, elle propose un dispositif de communication entre une pluralité de modules fonctionnels installés dans une unité locale et au moins un bus externe multi-émetteur, multi-récepteur multiplexé de type Ethernet, pour communiquer avec d'autres unités locales.

Selon l'invention, ce dispositif est caractérisé en ce qu'il comprend :
- au moins autant de bus internes que de modules fonctionnels de l'unité locale, chaque bus interne étant de type multi-émetteur, multi-récepteur, multiplexé, et respectant le format des informations transitant sur le bus externe, lesdits modules fonctionnels étant couplés aux bus internes, chaque bus interne n'étant contrôlé que par un seul module fonctionnel ; et
- au moins un module de couplage conçu pour assurer le transfert des informations entre les bus internes et le bus interne.

Cette solution offre de nombreux avantages. Tout d'abord, chaque module fonctionnel dispose d'un bus externe multi-émetteur, multi-récepteur propre pour émettre et/ou recevoir des informations. La bande passante mise à la disposition de chaque module correspond à donc à la bande passante totale du bus, c'est-à-dire, 10Mbits/s dans le cas d'un bus Ethernet. Les bus internes n'étant plus multiplexés (utilisation en mode non partagé), on bénéficie d'une isolation physique complète entre modules.

Par ailleurs, étant donné que chaque bus interne n'est contrôlé que par un seul module, tout risque de collision à l'intérieur de l'unité locale est évité, ce qui permet de simplifier les procédures d'émission.

Cette solution met en oeuvre un module de couplage simplifié dans la mesure où d'une part, le débit et le format des données utilisées en interne sont analogues à ceux d'un bus externes ; aucun traitement particulier n'est donc nécessaire pour transférer les informations circulant sur le bus externe vers l'intérieur de l'unité locale, mis à part une conversion de niveau électrique. On évite ainsi l'introduction d'un temps de retard, ainsi que des manipulations d'informations entraînant des risques de panne supplémentaires.

En outre, du fait que les bus internes utilisent le même protocole spatial (format des trames) que le bus externe, les mêmes outils de mise au point et de maintenance, tels que les outils d'émulation et d'observation de bus, peuvent être utilisés sur le bus externe et les bus internes.

Selon un premier mode de réalisation préféré de l'invention, chaque module de l'unité locale dispose d'au moins un bus interne sur lequel il est l'unique émetteur, les autres modules étant simplement récepteurs, un bus interne supplémentaire étant affecté à chaque bus externe pour la diffusion à l'intérieur de l'unité locale des informations transitant sur le bus externe, ce bus de diffusion étant de même type que les bus internes, et étant relié aux modules fonctionnels et au module de couplage.

Ainsi, chaque module fonctionnel est susceptible de recevoir des informations simultanément sur plusieurs bus internes.
Afin d'éviter l'engorgement en réception, chaque module fonctionnel comprend des moyens pour autoriser une émission uniquement si tous les bus internes d'un groupe prédéterminé sont libres.

Selon un second mode de réalisation préféré de l'invention, chaque bus interne de l'unité locale établit une liaison entre un module respectif de l'unité locale et le module de couplage.

Les modes de réalisation préférés du dispositif selon l'invention seront décrits ci-après, à titre d'exemples non limitatifs, avec référence aux dessins annexés dans lesquels :
La figure 1 représente schématiquement le mode d'interconnexion entre les modules fonctionnels de l'unité locale selon le premier mode de réalisation préféré de l'invention ;
Les figures 2 et 3 illustrent deux exemples d'ordonnancement de la transmission des messages sur les bus internes ;
La figure 4 montre schématiquement l'architecture d'un module fonctionnel représenté sur la figure 1 ;
La figure 5 montre schématiquement l'architecture du module de couplage représenté sur la figure 1 ;
La figure 6 montre le format d'une trame selon la norme IEEE 802.3 ;
La figure 7 représente schématiquement une unité de contrôle de bus que l'on trouve dans les modules fonctionnels et le module de couplage selon les figures 4 et 5 ;
Les figures 8 à 10 représentent schématiquement différents modes d'interconnexion entre les modules fonctionnels de l'unité locale selon le second mode de réalisation préféré de l'invention ;
La figure 11 montre schématiquement l'architecture d'un module fonctionnel représenté sur les figures 8 à 10 ;
La figure 12 montre schématiquement l'architecture du module de couplage représenté sur les figures 8 à 10; et
La figure 13 illustre l'ordonnancement des traitements de transmission des messages sur les bus internes ;
La figure 14 représente schématiquement une unité de contrôle de bus que l'on trouve dans les modules fonctionnels et le module de couplage selon les figures 12 et 13.

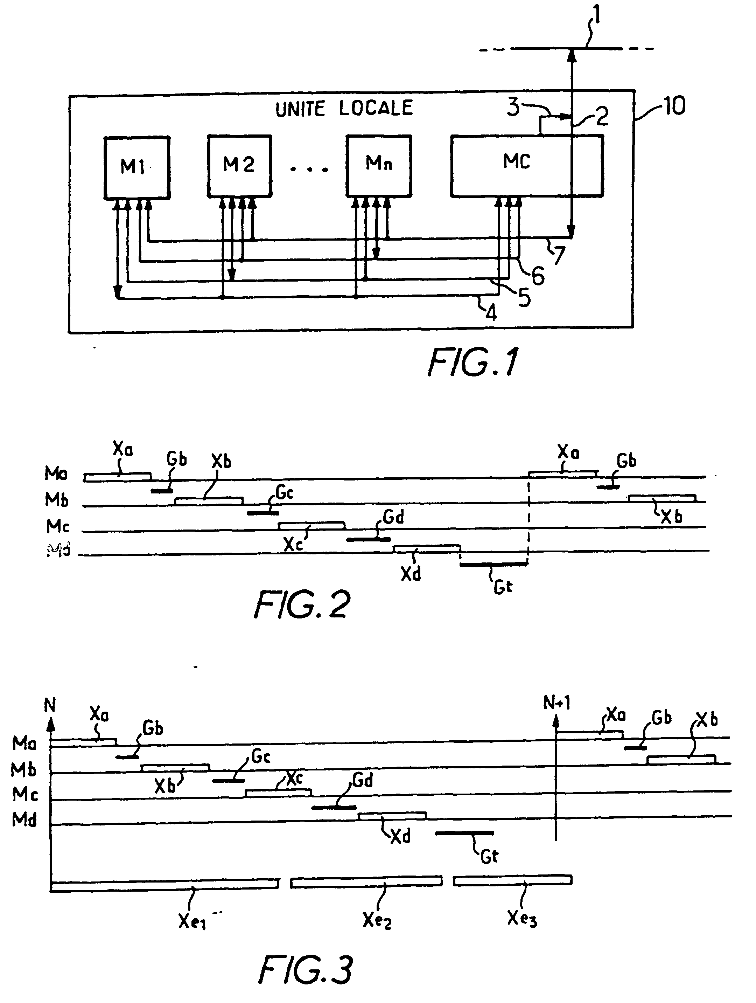

La figure 1 montre une unité locale 10 ou étagère embarquée à bord d'un aérodyne, connectée à au moins un bus externe 1.
Cette unité locale 10 comprend une pluralité de modules fonctionnels M1, M2, ... Mn, et au moins un module de couplage MC, enfichés dans un fond de panier leur permettant de se connecter à un ensemble de bus internes 4 à 7, le module de couplage MC assurant l'interconnexion entre le bus externe 1 et les bus internes 4 à 7.

L'unité locale 10 comprend au moins autant de bus internes 4 à 6 que de modules susceptibles d'émettre des messages à destination des autres modules de l'unité locale 10 ou d'un module situé dans une autre unité locale connectée au bus externe 1, et un bus supplémentaire 7 connecté au bus externe 1 par un moyen de connexion 2, de manière à ce que les messages transitant sur le bus externe soient diffusés vers les modules M1, M2, ... Mn de l'unité locale 10. Ainsi, chaque module M1 à Mn susceptible d'émettre des messages dispose d'un bus 4 à 6 sur lequel il est le seul émetteur.

Le bus externe 1, ainsi que les bus internes 4 à 7 sont des bus multi-émetteurs, multi-récepteurs, multiplexés et sont gérés avec un même format de données, les bus internes 4 à 7 étant utilisés en mono-émetteur.

De cette manière, les messages transitant sur le bus externe 1 sont transmis directement au bus interne 7, sans aucun traitement, si ce n'est une adaptation électrique pour tenir compte de la différence de niveau de tension et de forme d'onde entre le bus externe 1 et le bus interne 7.

Dans l'architecture décrite ci-avant, la capacité de réception de chaque module est limitée. On ne peut donc multiplier les réceptions (suite aux émissions) sur les bus internes sans risquer un engorgement au niveau des modules. Pour supprimer cet inconvénient, on a prévu d'ordonnancer les émissions d'au moins une partie des modules M1 à Mn, en se basant sur l'écoute de l'activité des différents bus internes 4 à 6, le bus interne 7 prolongeant le bus externe 1 dans l'unité locale 10 restant indépendant.

Selon un premier exemple, cet ordonnancement peut être réalisé en appliquant par analogie à l'ensemble ou à un groupe de modules M1, M2, ... Mn / bus internes 4 à 6 de l'unité locale 10, le principe du protocole CSMA/CD utilisé par Ethernet. Ainsi, dans cet exemple, une émission d'un module fonctionnel n'est autorisée que si tous les bus internes associés aux modules fonctionnels, appartenant au groupe considéré sont libres.
Pour cela, il suffit d'effectuer un ET logique du signal "bus actif" de tous les bus internes du groupe considéré.

De même, on va considérer qu'il y a une collision si deux modules fonctionnels du groupe considéré décident d'émettre en même temps, la collision étant alors traitée suivant le principe d'Ethemet, par attente d'un délai de durée aléatoire avant d'effectuer une nouvelle tentative d'émission.

De cette manière, on rend la capacité de réception d'un module indépendante du nombre de modules dans l'unité fonctionnelle.

Il est à noter que cette architecture autorise la redondance des modules. Il est en effet possible de placer deux modules redondants émetteurs sur le même bus, en association maître/esclave, le module esclave n'émettant qu'en l'absence d'émission du module maître.

Pour éviter les émissions simultanées sur plusieurs bus internes d'un même groupe prédéterminé, on peut, par configuration, comme illustré sur la figure 2, affecter un temps d'attente respectif ou "gap" Ga, Gb, Gc, Gd à chaque module Ma, Mb, Mc, Md du groupe considéré de l'unité locale, une émission Xa, Xb, Xc, Xd d'un module ne pouvant être effectuée que si tous les bus internes du groupe considéré sont libres pendant ce temps d'attente Ga à Gd. Ainsi, si tous les modules Ma à Md du groupe considéré sont affectés à des temps d'attente Ga à Gd différents, aucune émission simultanée ne pourra avoir lieu (dans cet exemple, Ga = 0).
A cet effet, chaque module comprend une temporisation dont la durée correspond au temps d'attente respectif Ga à Gd, qui est activée dès que tous les bus internes considérés sont libres, et désactivée lorsqu'une émission est détectée. Si la temporisation arrive à échéance sans avoir été désactivée, l'émission est autorisée.

Pour permettre aux modules affectés aux temps d'attente les plus longs d'émettre, chaque module Ma à Md ne peut émettre qu'une seule fois au cours d'une trame qui se termine par un temps d'attente Gt connu de tous les modules du groupe considéré. A cet effet, chaque module comprend une seconde temporisation commune à tous les modules du groupe, dont la durée correspond au temps d'attente Gt, et qui est également activée uniquement pendant les périodes où tous les bus considérés sont libres. Lorsque cette temporisation arrive à échéance sans avoir été désactivée, une nouvelle trame commence, ce qui réactive toutes les temporisations spécifiques de chaque module. Le module Ma affecté au temps d'attente Ga le plus court peut alors effectuer une nouvelle émission.

Dans un second exemple illustré par la figure 3, les émissions Xa à Xd des modules sont organisées en trames cycliques regroupant les émissions des modules de l'unité fonctionnelle. Cette périodicité est dans certains cas nécessaire lorsque les données transmises sont utilisées pour réaliser des asservissements faisant intervenir des dérivées en fonction du temps.

Dans cet exemple, les trames cycliques sont construites conformément au principe de la norme ARINC 629 selon laquelle chaque module Ma à Md est associé à une durée spécifique et n'a le droit d'émettre qu'un message par cycle ; l'autorisation d'émission est déterminée par l'écoute de tous les bus internes du groupe de bus internes modules considéré, par la détection du temps d'attente spécifique ou "gap" Ga à Gd associé au module, pendant lequel tous les bus du groupe sont restés libres, ainsi que par l'absence d'émission du module pendant le cycle en cours, cette absence d'émission étant déterminée par la détection d'un nouveau cycle, obtenue par détection d'une durée Gt d'inactivité des bus internes du groupe plus longue que toutes celles associées aux modules, cette durée marquant la fin d'une trame, et par la détection d'un top N, N+1 cyclique de début de trame.
La réalisation de ce principe de communication nécessite une troisième temporisation par module dont la durée correspond à celle du cycle et qui est activée en permanence, indépendamment de l'activité des bus internes.

Suivant la complexité des trames, contenant ou non des messages différents à chaque cycle avec une récurrence, la composition d'un message par un module est ou non réalisée à partir d'une table d'émission prédéfinie XT. Par ailleurs, pour certains modules, par exemple d'entrée/sortie, et dans la mesure où le débit offert par le bus le permet, on peut envisager que toutes les données acquises soient retransmises dans un seul message à chaque cycle du bus interne, ce qui simplifie la réalisation du module.

En parallèle des émissions effectuées par les modules Ma à Md, on trouve sur le bus interne 7 les messages Xe1, Xe2, Xe3 provenant du bus externe 1 qui sont retransmis de manière asynchrone et non cyclique dans l'unité locale 10 à destination des modules.

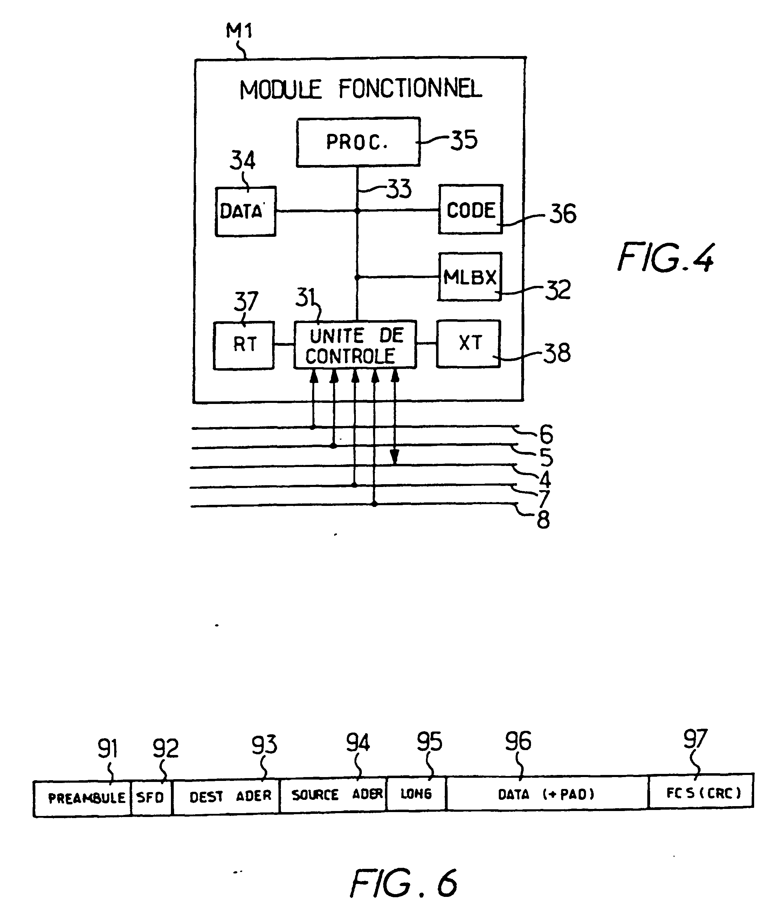

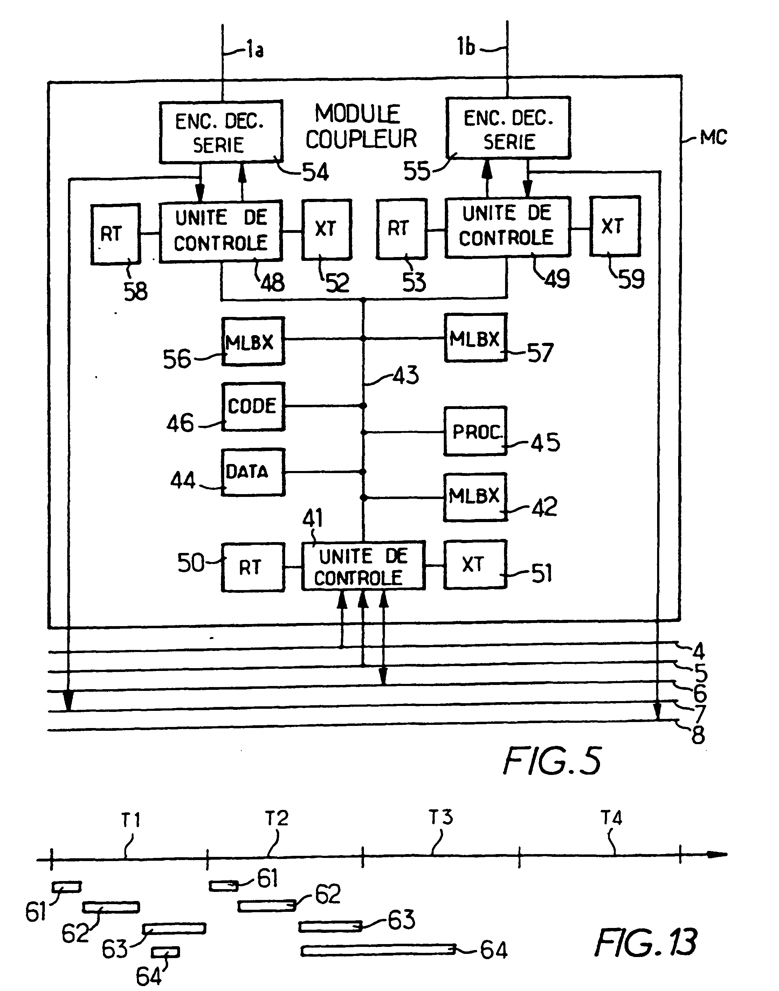

La figure 4 montre un exemple de l'architecture interne d'un module fonctionnel M1, émetteur sur le bus interne 4, et récepteur sur les bus internes 5 à 8, les bus 7 et 8 étant raccordés à deux bus externes à l'unité locale. Ce module comprend un processeur 35 connecté par l'intermédiaire d'un bus processeur 33 à une mémoire 36 contenant le programme à exécuter, une mémoire de travail 34, ainsi qu' une unité de contrôle 31 des bus internes 4 à 8, assurant les fonctions d'émission et de temporisation indiquées ci-avant, ainsi que le transfert de messages entre les bus internes 4 à 8 et une mémoire d'échange 32 également connectée au bus processeur 33 et jouant le rôle de boîte aux lettres. Cette unité de contrôle 31 peut être connectée à deux mémoires non volatiles 37, 38 dans lesquelles sont mémorisées les caractéristiques décrivant respectivement les informations à recevoir et à émettre. Ces tables 37, 38 indiquent notamment l'adresse de rangement des messages à recevoir ou à émettre dans la mémoire d'échange 32. L'accès à la table de réception 37 utilise un code d'identification du message (adresse du destinataire par exemple) et un numéro de bus interne 4 à 8 dans le cas d'un message à recevoir, ainsi que d'autres informations, par exemple, sur le type des données contenues dans le message.

Par configuration statique d'une table, on décharge ainsi le sous-système qui traite le message d'un certain nombre de tâches, notamment le filtrage des informations transmises par le message.

De même, la figure 5 montre un exemple de l'architecture interne d'un module de couplage MC assurant le transfert d'informations entre deux bus externes 1a,1b et les bus internes 4 à 8. Ce module est raccordé aux bus internes 4 à 6 par l'intermédiaire d'une unité de contrôle 41, analogue à l'unité de contrôle 31 d'un module fonctionnel M1. Cette unité de contrôle assure le transfert de messages entre les bus internes 4 à 6 et une mémoire d'échange 42, le bus 6 étant affecté au module de couplage MC pour lui permettre d'émettre des messages de service et de maintenance, par exemple, à destination des autres modules de l'unité locale 10.

Comme l'unité de contrôle 31 d'un module fonctionnel M1, l'unité de contrôle 41 est connectée à deux mémoires non volatiles RT et XT, 50, 51 dans lesquelles sont mémorisées toutes les informations décrivant respectivement les messages à recevoir et à émettre.

Le module de couplage MC comprend également un processeur 45 connecté par l'intermédiaire d'un bus processeur 43, à une mémoire 46 contenant le programme à exécuter, une mémoire de travail 44 dans laquelle les données sont mémorisées, et une mémoire d'échange 42 dans laquelle sont stockés les messages reçus ou à émettre sur les bus internes 4 à 8.

Pour des raisons d'économie, on a adopté des formats physiques d'information sur les bus internes 4 à 8 qui diffèrent de ceux des bus externes 1a et 1b, les contraintes de portée de transmission sur les bus internes 4 à 8 étant bien inférieures à celles imposées aux bus externes 1a, 1b.
C'est pourquoi le module de couplage MC comprend deux circuits encodeurs /décodeurs série 54,55 connectés respectivement aux deux bus externes 1a,1b, qui assurent, dans le sens réception externe (du bus externe 1a,1b respectif vers le bus interne correspondant 7, 8), la transformation des informations physiques de type différentiel, en informations logiques de type TTL, et la transformation inverse dans le sens émission.
Les circuits d'interface série 54,55 assurent également une fonction de surveillance des informations physiques.

Le module de couplage MC comprend également, deux unités de contrôle de bus externe 48,49 analogues à l'unité de contrôle 41, mais mono-canal en réception, connectées respectivement aux circuits d'interface série 54,55, pour assurer l'émission sur les bus externes 1a,1b des messages se trouvant dans une mémoire d'échange respective 56,57. Pour cela, chacune de ces deux unités de contrôle 48,49 est raccordée à une mémoire non volatile 52,59 respective contenant la description des messages à émettre, ainsi qu'à une mémoire non volatile 58,53 respective contenant la description des messages à recevoir. Les deux mémoires d'échange 56,57 sont connectées au processeur 45 par l'intermédiaire du bus 43, le processeur 45 effectuant par exemple, des fonctions de sélection de données redondantes provenant de bus fond de panier différents, et effectuant les transferts de données désirés, entre la mémoire d'échange 42 et les mémoires d'échange 56,57.

La figure 6 illustre le principe de construction des messages selon la norme IEEE 802.3, transitant aussi bien sur les bus internes 4 à 8 que les bus externes 1a, 1b. Chaque message contient un préambule 91 de 56 bits, suivi d'un champ SFD 92 de 8 bits, ces deux champs ayant une valeur prédéfinie indiquant le début d'un message. Les deux champs suivants 93, 94 sont destinés à recevoir respectivement l'adresse du destinataire et celle de l'émetteur du message, chacun de ces champs ayant une longueur variable de 2 à 6 octets. Le champ suivant 95 donne la longueur du message sur deux octets, tandis que le champ DATA 96 contient les données à transmettre sur 46 à 1500 octets. Le message se termine par le champ FCS 97 qui indique la fin du message et foumit sur 4 octets la valeur de la somme de contrôle du message, par exemple de type CRC (Cyclic Redundancy Check). Ainsi les messages selon cette norme ont une taille variant de 64 à 1518 octets, les informations de service occupant 18 à 26 octets.

Dans les messages transmis entre les modules M1, M2, ... Mn de l'unité locale 10, le champ 93 contenant normalement l'adresse du destinataire dans les messages Ethernet est en fait utilisé pour transmettre un code d'identification du message, ceci afin de permettre la diffusion d'un message vers plusieurs modules, ce qui correspond au principe de l'identification par le contenu.

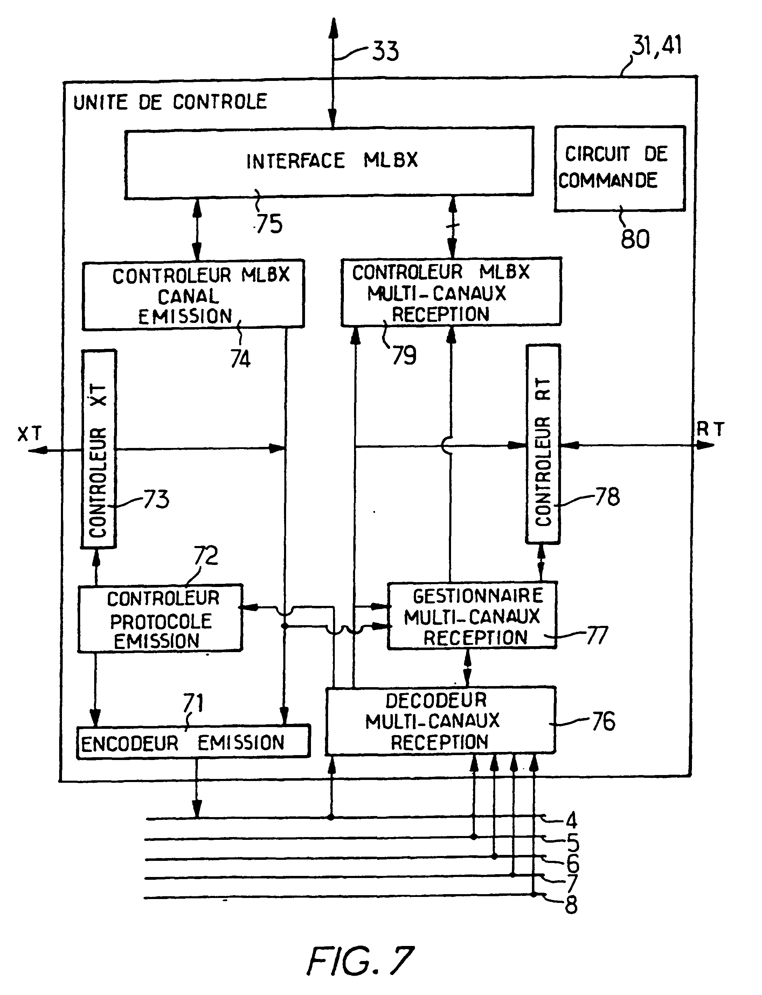

La figure 7 représente l'unité de contrôle 31,41 de bus des modules M1, MC représentés sur les figures 4 et 5. Cette unité de contrôle comprend, pour l'émission de messages sur le bus interne d'émission, par exemple 4, affecté à l'unité de contrôle :
- un circuit encodeur d'émission 71 connecté au bus interne 4, réalisant le formattage, la sérialisation et l'encodage des informations à émettre,
- un circuit de contrôle de protocole d'émission 72 qui réalise la gestion du protocole (format temporel) de prise de décision d'émission des informations sur le bus, et le pilotage du format spatial des messages en émission,
- un circuit de contrôle 73 de la mémoire non volatile d'émission 38,51 contenant la description des messages à émettre, et l'adresse de ces derniers dans la mémoire d'échange 32,42, ce circuit de contrôle 73 effectuant la lecture des informations de description associées à chacun des blocs de données d'un message à émettre donné, contenues dans la mémoire non volatile 38,51, et
- un circuit de contrôle en émission 74 de la mémoire d'échange 32,42 qui réalise la gestion en émission d'un circuit d'interface 75 pour l'acquisition et la surveillance des informations à émettre, le circuit d'interface 75 effectuant la gestion des différentes demandes d'accès à la mémoire d'échange 32,42 via le bus de transfert d'adresses et de données 33,43.

L'unité de contrôle 31,41 comprend pour la réception des informations transitant sur les bus internes 4 à 8 :
- un circuit décodeur de réception multicanaux 76 conçu pour détecter l'activité de chaque bus ou canal, désérialiser les informations reçues sur chacun des canaux, et effectuer des surveillances de niveau physique et partiellement logique canal par canal,
- un circuit de gestion de réception multicanaux 77 qui effectue la gestion et la surveillance des informations reçues sur chaque canal, ainsi que l'ordonnancement des traitements à effectuer pour la réception des informations transmises par chaque canal,
- un circuit de contrôle 78 de la mémoire non volatile de réception 37,50 contenant la description des blocs de données à recevoir, et l'adresse de ces derniers dans la mémoire d'échange 32,42, ce circuit de contrôle 78 effectuant la lecture des informations de description associées à un bloc de données reçu par un canal, contenues dans la mémoire non volatile 37,50, et
- un circuit de contrôle de réception 79 de la mémoire d'échange 32,42 qui réalise la gestion en réception du circuit d'interface 75 pour la fourniture et la surveillance des informations reçues.

Par ailleurs, l'unité de contrôle 31,41 comprend un circuit de commande 80 qui permet à une entité externe de configurer, surveiller et commander les différents organes de l'unité de contrôle.

Il convient de noter que le circuit décodeur de réception multicanaux 76 est également connecté au bus 4 de manière à recevoir les blocs de données émis par le circuit encodeur d'émission 71. Les informations à émettre utilisées par le circuit encodeur d'émission 71 sont généralement fournies directement au circuit de gestion de réception multi-canaux 77, de manière à permettre le contrôle de la qualité de l'émission par comparaison des données émises avec celles reçues.

Une telle unité de contrôle 31,41 peut avantageusement être intégrée dans un ASIC.

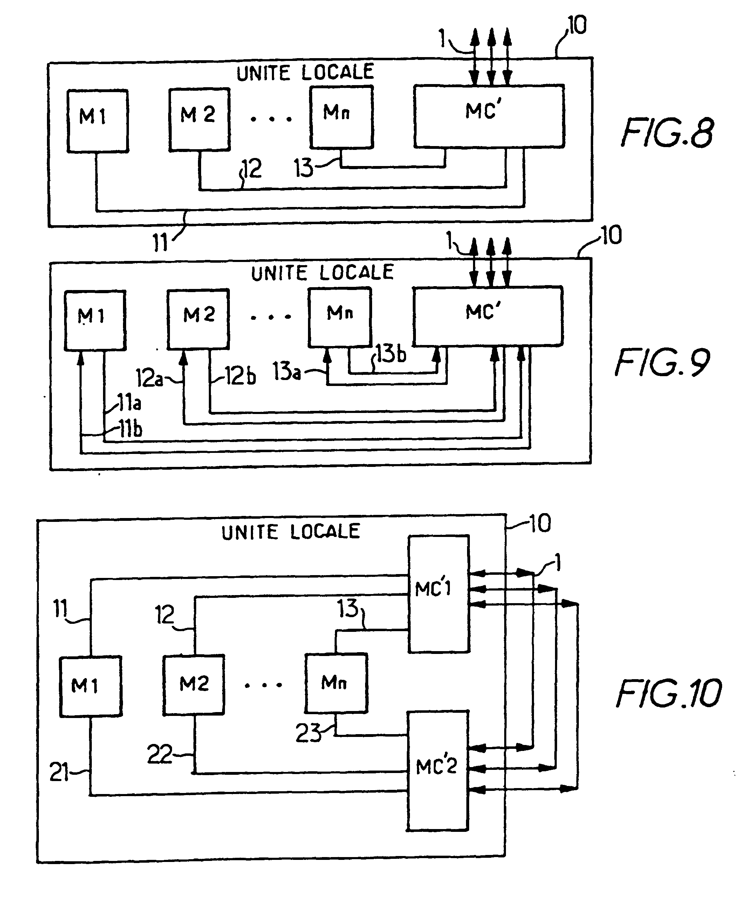

Les figures 8 à 10 montrent un autre exemple de connexion des modules fonctionnels M1, M2, ... Mn de l'unité locale 10. Dans cet exemple, les modules M1, M2, ... Mn sont reliés chacun par une liaison bidirectionnelle respective à un module de couplage MC', le module de couplage assurant à la fois les communications entre modules de l'unité locale 10, et les communications entre les modules et l'extérieur de l'unité locale 10 qui peut être raccordée à un ou plusieurs bus externes 1 ou à d'autres éléments tels que des capteurs ou des actionneurs.

Sur la figure 8, chaque module M1, M2, ... Mn est relié au module de couplage MC' par un bus 11, 12, 13 respectif de type Ethernet utilisé en alternance commande - réponse (half-duplex).

Tel que montré sur la figure 9, la liaison bidirectionnelle entre chacun des modules M1 à Mn et le module de couplage MC' peut être réalisée par deux bus Ethernet 11a, 11b, 12a, 12b, 13a, 13b, le premier bus étant affecté par chaque module M1 à Mn à l'émission de messages et le second bus à la réception de messages. On double ainsi le débit de transmission mis à la disposition de chaque module.

Dans le cas de l'architecture représentée sur la figure 9, les unités de contrôle 31' et 41' n'ont plus besoin de tester l'activité du bus interne avant d'émettre, étant donné que chaque module M1 à Mn et MC' de l'unité locale émet sur un bus où il est l'unique émetteur.

Il apparaît clairement sur les figures 8 et 9 que le module de couplage MC' constitue le point commun de cette architecture. Pour supprimer cet inconvénient, il est possible, comme montré sur la figure 10, d'utiliser deux modules de couplage redondants MC'1 et MC'2, chacun étant raccordé par un bus dédié respectif 11 à 13 et 21 à 23, à chacun des modules M1 à Mn. Chaque module fonctionnel doit alors effectuer une comparaison des messages reçus par les deux bus connectés respectivement aux deux modules de couplage MC'1, MC'2, une absence de transmission d'un module de couplage révélant une défaillance de celui-ci.

Bien entendu, l'architecture montrée sur les figures 8 et 9 peut également être triplée, en utilisant trois modules de couplage pour pouvoir assurer les communications entre les modules fonctionnels, même en cas de panne d'un des modules de couplage.

Dans l'architecture représentée sur les figures 8 et 10, l'émission sur le bus est soumise au contrôle, soit de l'émetteur lorsqu'il s'agit d'un module fonctionnel M1 à Mn, soit du récepteur lorsque l'émetteur est le module de couplage MC'. Dans ce dernier cas, un message est émis par le module de couplage uniquement sur requête du module fonctionnel destinataire du message, cette requête indiquant le ou les message(s) devant être émis.

Dans cette architecture, la latence est réduite au minimum dans la mesure où une requête de réception d'un module entraîne la transmission par le module de couplage des messages correspondants.
Dans le cas où un message doit être diffusé à plusieurs modules, ce message sera émis par le module de couplage MC' autant de fois qu'il y a de modules destinataires, c'est-à-dire, qu'il y a de demandes des différents modules récepteurs.

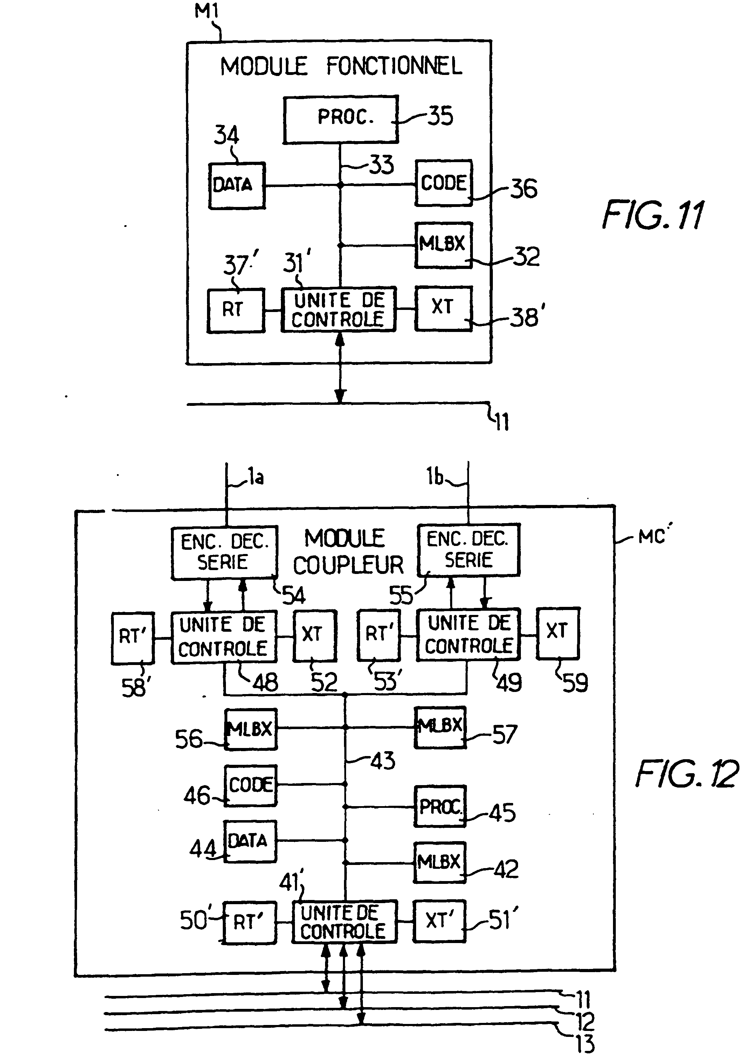

Le module fonctionnel M1 représenté sur la figure 11 est identique au module M1 de la figure 4, mis à part qu'il comprend une unité de contrôle 31' simplifiée (non multi-récepteur), dans la mesure où celle-ci contrôle un seul bus interne 11 (ou deux dans le cas où le module de couplage MC' est doublé par un autre module de couplage redondant), assure systématiquement le transfert des messages circulant sur ce bus interne 11, et n'a pas besoin d'effectuer une détection et un traitement de collision.

Par ailleurs, les mémoires non volatiles 37',38' contiennent les tables RT, XT décrivant respectivement les caractéristiques des messages à recevoir et à émettre. Ces tables indiquent notamment l'adresse de rangement dans la mémoire d'échange 32 des messages reçus ou à émettre, en association avec un code d'identification du message, ainsi que d'autres informations, par exemple, sur le type des données contenues dans le message.

Il est à remarquer que dans le cas du module M1 représenté sur la figure 11, l'unité de contrôle 31' présente la même architecture que l'unité de contrôle 31 représentée sur la figure 7, à l'exception du fait qu'elle est mono-canal en réception, ce qui permet de simplifier les circuits décodeur réception 76, contrôleur 79 de mémoire d'échange, ainsi que le gestionnaire de réception 77.

De même le contrôleur d'émission 72 peut être simplifié puisqu'il n'est pas nécessaire d'effectuer une gestion des collisions. Le contrôleur de protocole d'émission 72 devient alors très simple.

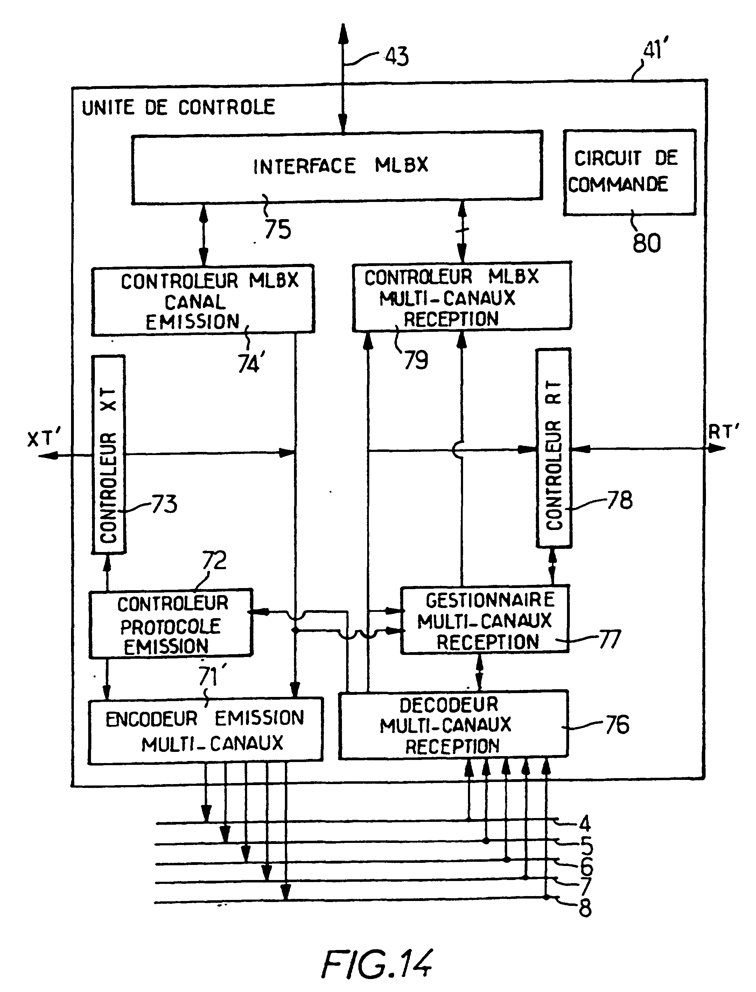

Le module de couplage MC' représenté sur la figure 12 ressemble à celui de la figure 5, mis à part le fait qu'il n'y a plus de liaison directe en réception entre les bus externes 1a, 1b et des bus internes de l'unité locale 10, et qu'il comprend une unité de contrôle 41' des bus internes multi-émetteur et multi-récepteur, qui reçoit tous les messages transitant sur les bus internes et utilise le code d'identification associé pour les rediriger, et qui n'a pas besoin de détecter et traiter les collisions.

Dans les mémoires non volatiles 53', 58', sont stockées des tables RT' qui contiennent les codes d'identification des messages transmis par les bus 1a et 1b, qui sont à retransmettre à un module M1 à Mn de l'unité locale 10, ces messages étant stockés respectivement dans les mémoires d'échange 56 et 57 à une adresse respective indiquée par les tables 53', 58'.
De même, les mémoires non volatiles 52, 59 contiennent les adresses des messages stockés dans les mémoires d'échange 56, 57 qui sont à retransmettre respectivement sur les bus externes 1a, 1b.

La mémoire non volatile 51' contient la table d'émission XT' sur les bus internes 11 à 13, qui rassemble des données spécifiques à chaque module M1 à Mn ou bus local 11 à 13. Pour chaque bus, elle associe chaque numéro de requête susceptible d'être transmise par le bus, à un assemblage de données constituant le message à émettre sur le bus 11 à 13 d'où provient la requête. Chaque message est décrit par les codes d'identification et les adresses de rangement dans les mémoires d'échange 42, 56, 57, des données composant le message.

La mémoire non volatile 50' contient la table de réception RT' qui définit pour chaque bus interne 11 à 13, la liste des adresses de rangement des données reçues dans le message identifié par sa requête et son bus.

Il est à noter que dans le cas de l'architecture représentée sur la figure 9, les unités de contrôle 31' et 41' n'ont plus besoin de tester l'activité du bus interne avant d'émettre, étant donné que chaque module M1 à Mn et MC' de l'unité locale émet sur un bus où il est l'unique émetteur.

La figure 13 montre un exemple d'ordonnancement des traitements d'émission et de réception effectués par le module de couplage MC'. Le module de couplage comprend une boucle d'analyse qui utilise un allocateur de temps pour affecter à chaque bus interne 11, 12, 13 et externe 1a, 1b une tranche temporelle T1, T2, T3 de durée prédéfinie. En début de chaque tranche T1, T2, T3, pendant la période 61, le module MC' teste la présence dans la mémoire 42 d'une requête issue d'un module M1 à Mn connecté au bus correspondant. Si une telle requête est trouvée, le module de couplage MC' construit, pendant la période 62, le message à émettre en réponse à la requête, à l'aide de la table XT' contenue dans la mémoire 51'. Si une telle requête est absente, la tranche correspondante est allouée à l'analyse d'un bus externe

En général, une requête est suivie d'un numéro de requête et d'un message émis par le module M1 à Mn. Le module de couplage MC' va donc pendant la période 63 répartir en vue de leur émission ultérieure, les différentes données du message reçu dans les mémoires d'échange 42, 56, 57, en fonction des adresses correspondant au numéro de requête, indiquées dans la table RT' contenue dans la mémoire 50'. Pendant, la période 64, l'unité de contrôle 41' du module de couplage MC' effectue l'émission des données du message correspondant à la requête qui vient d'être traitée, et le module de couplage MC' peut entamer au début de la tranche de temps T2 suivante, le traitement de la requête correspondante.
Il est à noter que l'émission d'un message peut recouvrir la tranche temporelle suivante, puisque, à la fin de la période 63, le processeur 45 du module de couplage MC' a transféré les données dans la mémoire d'échange 42, et donc terminé le traitement de la requête, l'émission du message étant alors prise en charge par l'unité de contrôle 41'.

Les informations reçues par les bus externes sont identifiées par leur contenu, par exemple par un code d'identification ou par l'adresse du destinataire. Ce code d'identification est utilisé par le module de couplage MC' pour accéder à la table RT' contenue dans les mémoires 53', 58', qui permet de répartir les informations reçues dans la mémoire d'échange 42, en vue de leur émission ultérieure vers un ou plusieurs modules M1 à Mn.

Les informations à émettre sur les bus externes sont issues des émissions internes des modules M1 à Mn, une émission externe n'ayant lieu que si un message à été transféré dans la mémoire d'échange 56, 57 à la suite de la réception d'un message émis par un module.

On peut prévoir que l'allocateur répartisse le temps en un cycle de traitement de requêtes périodiques, et un cycle de traitement de requêtes apériodiques, une tranche temporelle prédéfinie étant affectée au traitement chaque requête. La durée du cycle périodique correspond donc au cumul des durées des tranches temporelles affectées aux requêtes périodiques.

Chaque message apériodique émis par un module M1 à Mn est directement reçu et stocké par le module de couplage. Cette réception donne lieu au positionnement d'une requête pour chacun des bus sur lesquels devra être émis le message reçu, indiqués dans la table XT contenue dans la mémoire 51'.

La figure 14 représente l'unité de contrôle 41' du module de couplage MC' représenté sur la figure 11. Cette unité de contrôle est similaire à celle représentée sur la figure 7, mis à part le fait que l'encodeur d'émission 71' et le circuit de contrôle en émission 74' doivent également être multi-canaux, puisque le module de couplage est émetteur et récepteur sur tous les bus internes 11 à 13 qui lui sont raccordés.

## Revendications

1. Dispositif de communication entre une pluralité de modules fonctionnels (M1, M2, ... Mn) dans une unité locale (10) et au moins un bus externe (1) multi-émetteur, multi-récepteur multiplexé de type Ethernet, pour communiquer avec d'autres unités locales,
**caractérisé en ce qu'**il comprend :
- au moins autant de bus internes (4 à 6 ; 11 à 13) que de modules fonctionnels (M1, M2, ... Mn) de l'unité locale (10), chaque bus interne (4 à 6 ; 11 à 13) étant de type multi-émetteur, multi-récepteur, multiplexé, et respectant le format des informations transitant sur le bus externe (1), lesdits modules fonctionnels (M1, M2, ... Mn) étant couplés aux bus internes (4 à 6 ; 11 à 13), chaque bus interne (4 à 6 ; 11 à 13) n'étant contrôlé que par un seul module fonctionnel (M1, M2, ... Mn) ; et
- au moins un module de couplage (MC) conçu pour assurer le transfert des informations entre les bus internes (4 à 6; 11 à 13) et le bus interne (1).

2. Dispositif selon la revendication 1,
**caractérisé en ce que** chaque module (M1, M2, ... Mn) de l'unité locale dispose d'au moins un bus interne (4 à 6) sur lequel il est l'unique émetteur, les autres modules étant simplement récepteurs, un bus interne (7) supplémentaire étant affecté à chaque bus externe (1) pour la diffusion à l'intérieur de l'unité locale (10) des informations transitant sur le bus externe, ce bus de diffusion (7) étant de même type que les bus internes (4 à 6), et étant relié aux modules fonctionnels (M1, M2, ... Mn) et au module de couplage (MC).

3. Dispositif selon la revendication 1 ou 2,
**caractérisé en ce que** chaque module fonctionnel (M1, M2, ... Mn) comprend des moyens pour autoriser une émission uniquement si tous les bus internes d'au moins un groupe prédéterminé de l'ensemble des bus internes (4 à 6) associés aux modules sont libres.

4. Dispositif selon la revendication 3,
**caractérisé en ce que** chaque module (M1, M2, ... Mn) comprend des moyens d'attente pendant un délai de durée aléatoire avant d'effectuer une nouvelle tentative d'émission, lorsque plusieurs modules du groupe prédéterminé tentent d'émettre en même temps.

5. Dispositif selon la revendication 3,
**caractérisé en ce que** chaque module (M1, M2, ... Mn) est associé à un temps d'attente (Ga à Gd) respectif pendant lequel l'ensemble des bus internes (4 à 6) du groupe prédéterminé doit rester libre avant qu'il puisse émettre sur le bus interne (4 à 6) auquel il est associé.

6. Dispositif selon la revendication 5,
**caractérisé en ce que** les émissions (Xa à Xd) de chaque module (M1, M2,... Mn) du groupe prédéterminé sur leur bus associé (4 à 6) sont réparties en trames se terminant par un délai d'attente (Gt) de durée prédéterminée connue de tous les modules (M1, M2, ... Mn) du groupe prédéterminé, chaque module (M1, M2, ... Mn) du groupe prédéterminé n'étant autorisé à émettre qu'une seule fois par trame.

7. Dispositif selon la revendication 6,
**caractérisé en ce que** les dites trames sont cycliques, la durée du cycle étant connue de tous les modules du groupe prédéterminé.

8. Dispositif selon l'une des revendications précédentes,
**caractérisé en ce que** chaque module fonctionnel (M1, M2, ... Mn) comprend une unité de contrôle (31) connectée à chacun des bus internes (4 à 7), conçu pour assurer le tri de toutes les informations circulant sur les bus internes (4 à 7) pour ne recevoir que les informations destinées au module, et pour émettre des informations sur le bus interne (4 à 6) affecté en émission audit module.

9. Dispositif selon la revendication 8,
**caractérisé en ce que** l'unité de contrôle (31) est connectée à des mémoires non volatiles (37,38) contenant l'identification et la description des caractéristiques des informations à recevoir et à émettre, ainsi que le séquencement des informations à émettre, l'unité de contrôle (31) comprenant des moyens pour détecter sur les bus internes (4 à 7) les informations à recevoir, et pour transférer celles-ci dans une mémoire d'échange (32).

10. Dispositif selon la revendication 8 ou 9,
**caractérisé en ce que** l'unité de contrôle (31) comprend des moyens pour écouter le bus (4 à 6) affecté à l'émission, pour comparer durant leur émission les informations émises sur le bus avec les informations lues simultanément sur le bus, et pour invalider l'émission de l'information en cours d'émission et engendrer un signal d'erreur lorsque la comparaison fait apparaître une différence.

11. Dispositif selon l'une des revendications précédentes,
**caractérisé en ce que** le module de couplage (MC) comprend des moyens (41) pour reconnaître les informations circulant sur les bus internes (4 à 6) qui sont à envoyer sur le bus externe (1).

12. Dispositif selon l'une des revendications précédentes,
**caractérisé en ce que** le module de couplage (MC) comprend une première unité de contrôle (41) connectée aux bus internes (4 à 6) non raccordés au bus externe, une première mémoire d'échange (42) connectée à l'unité de contrôle (41), à un processeur (45), à une seconde mémoire d'échange (56), et à une seconde unité de contrôle (48) analogue à la première (41) et assurant le transfert des informations de la seconde mémoire d'échange (56) vers le bus externe (1a).

13. Dispositif selon l'une des revendications précédentes,
**caractérisé en ce que** le module de couplage (MC) dispose d'un bus interne (6) sur lequel il est l'unique émetteur, lui permettant d'envoyer aux modules fonctionnels (M1 à Mn) de l'unité locale (10) des informations de service et de maintenance, de manière à pouvoir indiquer aux modules fonctionnels les défauts de transfert d'informations sur le bus externe (1a) et les pannes éventuelles.

14. Dispositif selon l'une des revendications 2 à 13,
**caractérisé en ce que** le module de couplage (MC) comprend un circuit d'interface série (54) assurant la conversion du signal analogique véhiculant les informations sur le bus externe (1a) en un signal logique appliqué au bus interne de diffusion (7), et inversement pour transférer les informations émises par la seconde unité de contrôle (48) vers le bus externe (1a).

15. Dispositif selon l'une des revendications 11 à 14,
**caractérisé en ce que** le module de couplage (MC) est connecté à un second bus externe (1b) de même type que le premier bus externe (1a), et relié à un bus interne (8) par l'intermédiaire d'un second circuit d'interface série (55), le processeur (45) étant connecté à une troisième mémoire d'échange (57) et au second bus externe (1b) par l'intermédiaire d'une troisième unité de contrôle (49) et du second circuit d'interface série (55).

16. Dispositif selon la revendication 1,
**caractérisé en ce que** chaque bus interne (11 à 13) de l'unité locale (10) établit une liaison entre un module (M1, M2, ... Mn) respectif de l'unité locale et le module de couplage (MC').

17. Dispositif selon la revendication 1,
**caractérisé en ce que** chaque bus interne (11 à 13) de l'unité locale (10) établit une liaison bidirectionnelle entre un module (M1, M2, ... Mn) respectif de l'unité locale et le module de couplage (MC').

18. Dispositif selon la revendication 17,
**caractérisé en ce que** la liaison bidirectionnelle entre chaque module (M1, M2, ... Mn) respectif de l'unité locale et le module de couplage (MC') est réalisée par deux bus multi-émetteurs, multi-récepteurs (11a et 11b, 12a et 12b, 13a et 13b).

19. Dispositif selon l'une des revendications 16 à 18,
**caractérisé en ce qu'**il comprend deux modules de couplage (MC'1, MC'2) redondants.

20. Dispositif selon l'une des revendications 16 à 19,
**caractérisé en ce que** le module de couplage (MC') émet un ou plusieurs messages vers un module (M1 à Mn) uniquement sur requête de ce dernier.

21. Dispositif selon l'une des revendications 16 à 20,
**caractérisé en ce que** le module de couplage (MC') affecte à chaque module (M1 à Mn) une tranche temporelle prédéfinie au cours de laquelle il traite les requêtes émises par ce celui-ci.

22. Dispositif selon l'une des revendications 16 à 21,
**caractérisé en ce que** le module de couplage (MC') comprend une table (RT') indiquant les adresses de répartition des données élémentaires contenues dans chaque message reçu.

23. Dispositif selon l'une des revendications 16 à 22,
**caractérisé en ce que** le module de couplage (MC') comprend une table (XT') indiquant les adresses des données élémentaires constituant chaque message à émettre sur requête.

## Patentansprüche

1. Kommunikationsvorrichtung zwischen mehreren Funktionsmodulen (M1, M2, ..., Mn) in einer lokalen Einheit (10) und mindestens einer externen multiplexierten Mehrfachsender-Mehrfachempfänger-Busleitung (1) vom Typ Ethernet, um mit anderen lokalen Einheiten zu kommunizieren,
**dadurch gekennzeichnet, dass** sie aufweist:
- zumindest so viele interne Busleitungen (4 bis 6; 11 bis 13) wie Funktionsmodule (M1, M2, ..., Mn) der lokalen Einheit (10), wobei jede interne Busleitung (4 bis 6; 11 bis 13) vom Typ multiplexierter Mehrfachsender-Mehrfachempfänger ist und das Format der über die externe Busleitung (1) übertragenden Informationen beachtet, wobei die Funktionsmodule (M1, M2, ..., Mn) mit den internen Busleitungen (4 bis 6; 11 bis 13) gekoppelt sind und jede interne Busleitung (4 bis 6; 11 bis 13) nur von einem einzigen Funktionsmodul (M1, M2, ..., Mn) überwacht wird;
- und mindestens einen Koppelmodul (MC), der in der Lage ist, die Übertragung der Informationen zwischen den internen Busleitungen (4 bis 6; 11 bis 13) und der externen Busleitung (1) zu gewährleisten.

2. Vorrichtung nach Anspruch 1, **dadurch gekennzeichnet, dass** jeder Modul (M1, M2, ..., Mn) der lokalen Einheit über mindestens eine interne Busleitung (4 bis 6) verfügt, auf der er der einzige Sender ist, während die anderen Module nur Empfänger ist, wobei eine zusätzliche interne Busleitung (7) jeder externen Busleitung (1) für die Verteilung von über die externe Busleitung übertragenen Informationen im Inneren der lokalen Einheit (10) zugeteilt ist, wobei diese Verteilungsbusleitung (7) vom gleichen Typ wie die internen Busleitungen (4 bis 6) und mit den Funktionsmodulen (M1, M2, ..., Mn) und dem Koppelmodul (MC) verbunden ist.

3. Vorrichtung nach Anspruch 1 oder 2, **dadurch gekennzeichnet, dass** jeder Funktionsmodul (M1, M2, ..., Mn) Mittel aufweist, um einen Sendevorgang nur dann zu erlauben, wenn alle internen Busleitungen mindestens einer vorbestimmten Gruppe aus der Gesamtheit der den Modulen zugeordneten internen Busleitungen (4 bis 6) frei sind.

4. Vorrichtung nach Anspruch 3, **dadurch gekennzeichnet, dass** jeder Modul (M1, M2, ..., Mn) Mittel zum Warten während einer Zeitspanne von zufälliger Dauer aufweist, ehe ein neuer Sendeversuch durchgeführt wird, wenn mehrere Module der vorbestimmten Gruppe gleichzeitig zu senden versuchen.

5. Vorrichtung nach Anspruch 3, **dadurch gekennzeichnet, dass** jeder Modul (M1, M2, ..., Mn) einer Wartezeit (Ga bis Gd) zugeordnet ist, während der die Gesamtheit der internen Busleitungen (4 bis 6) der vorbestimmten Gruppe frei bleiben muss, ehe er auf der internen Busleitung (4 bis 6) senden kann, der er zugeordnet ist.

6. Vorrichtung nach Anspruch 5, **dadurch gekennzeichnet, dass** die Aussendungen (Xa bis Xd) jedes Moduls (M1, M2, ..., Mn) der vorbestimmten Gruppe auf ihrer zugeordneten Busleitung (4 bis 6) in Rahmen aufgeteilt sind, die in einer Wartezeit (Gt) vorbestimmter Dauer enden, die allen Modulen (M1, M2, ..., Mn) der vorbestimmten Gruppe bekannt ist, wobei jeder Modul (M1, M2, ..., Mn) der vorbestimmten Gruppe nur einmal pro Rahmen senden darf.

7. Vorrichtung nach Anspruch 6, **dadurch gekennzeichnet, dass** die Rahmen zyklisch sind, wobei die Dauer des Zyklus allen Modulen der vorbestimmten Gruppe bekannt ist.

8. Vorrichtung nach einem der vorhergehenden Ansprüche, **dadurch gekennzeichnet, dass** jeder Funktionsmodul (M1, M2, ..., Mn) eine Überwachungseinheit (31) aufweist, die mit jeder der internen Busleitungen (4 bis 7) verbunden und so gestaltet ist, dass sie das Sortieren aller Informationen gewährleistet, die auf den internen Busleitungen (4 bis 7) übertragen werden, um nur die für den Modul bestimmten Informationen zu empfangen und um Informationen auf der internen Busleitung (4 bis 6) zu senden, die dem Modul zum Senden zugeordnet ist.

9. Vorrichtung nach Anspruch 8, **dadurch gekennzeichnet, dass** die Überwachungseinheit (31) mit nicht-flüchtigen Speichern (37, 38) verbunden ist, die die Identifikation und die Beschreibung der Eigenschaften der zu empfangenden und zu sendenden Informationen sowie die Sequenzierung der zu sendenden Informationen enthalten, wobei die Überwachungseinheit (31) Mittel aufweist, um auf den internen Busleitungen (4 bis 7) die zu empfangenden Informationen zu erfassen und um diese in einen Austauschspeicher (32) zu übertragen.

10. Vorrichtung nach Anspruch 8 oder 9, **dadurch gekennzeichnet, dass** die Überwachungseinheit (31) Mittel aufweist, um die dem Senden zugeordnete Busleitung (4 bis 6) zu überprüfen, um während ihres Sendens die auf der Busleitung gesendeten Informationen mit den Informationen zu vergleichen, die gleichzeitig auf der Busleitung gelesen werden, und um das Aussenden der in Sendung befindlichen Information zu verhindern und ein Fehlersignal zu erzeugen, wenn der Vergleich eine Differenz aufzeigt.

11. Vorrichtung nach einem der vorhergehenden Ansprüche, **dadurch gekennzeichnet, dass** der Koppelmodul (MC) Mittel (41) aufweist, um die auf den internen Busleitungen (4 bis 6) übertragenen Informationen zu erkennen, die an die externe Busleitung (1) gesendet werden sollen.

12. Vorrichtung nach einem der vorhergehenden Ansprüche, **dadurch gekennzeichnet, dass** der Koppelmodul (MC) eine erste Überwachungseinheit (41), die mit denjenigen internen Busleitungen (4 bis 6) verbunden ist, welche nicht an die externe Busleitung angeschlossen sind, und einen ersten Austauschspeicher (42) aufweist, der mit der Überwachungseinheit (41), mit einem Prozessor (45), einem zweiten Austauschspeicher (56) und einer zweitem Überwachungseinheit (48) analog zur ersten (41) verbunden ist, die die Übertragung der Informationen vom zweiten Austauschspeicher (56) zur externen Busleitung (1a) gewährleistet.

13. Vorrichtung nach einem der vorhergehenden Ansprüche, **dadurch gekennzeichnet, dass** der Koppelmodul (MC) über eine interne Busleitung (6) verfügt, auf der er der einzige Sender ist, was es ihm ermöglicht, an die Funktionsmodule (M1 bis Mn) der lokalen Einheit (10) Dienst- und Wartungsinformationen zu senden, um den Funktionsmodulen die Informationsübertragungsfehler auf der externen Busleitung (1a) und die möglichen Pannen anzuzeigen.

14. Vorrichtung nach einem der Ansprüche 2 bis 13,
**dadurch gekennzeichnet, dass** der Koppelmodul (MC) eine serielle Schnittstellenschaltung (54) aufweist, die die Umwandlung des die Informationen auf der externen Busleitung (1a) transportierenden analogen Signals in ein logisches Signal bewirkt, das an die interne Verteilerbusleitung (7) angelegt wird, und umgekehrt, um die von der zweiten Überwachungseinheit (48) gesendeten Informationen zur externen Busleitung (1a) zu übertragen.

15. Vorrichtung nach einem der Ansprüche 11 bis 14, **dadurch gekennzeichnet, dass** der Koppelmodul (MC) mit einer zweiten externen Busleitung (1b) vom gleichen Typ wie die erste externe Busleitung (1a) und mit einer internen Busleitung (8) über eine zweite serielle Schnittstellenschaltung (55) verbunden ist, während der Prozessor (45) mit einem dritten Austauschspeicher (57) und mit der zweiten externen Busleitung (1b) über eine dritte Überwachungseinheit (49) und die zweite serielle Schnittstellenschaltung (55) verbunden ist.

16. Vorrichtung nach Anspruch 1, **dadurch gekennzeichnet, dass** jede interne Busleitung (11 bis 13) der lokalen Einheit (10) eine Verbindung zwischen je einem Modul (M1, M2, ..., Mn) der lokalen Einheit und dem Koppelmodul (MC') herstellt.

17. Vorrichtung nach Anspruch 1, **dadurch gekennzeichnet, dass** jede interne Busleitung (11 bis 13) der lokalen Einheit (10) eine bidirektionale Verbindung zwischen einem Modul (M1, M2, ..., Mn) der lokalen Einheit und dem Koppelmodul (MC') herstellt.

18. Vorrichtung nach Anspruch 17, **dadurch gekennzeichnet, dass** die bidirektionale Verbindung zwischen je einem Modul (M1, M2, ..., Mn) der lokalen Einheit und dem Koppelmodul (MC') von zwei Mehrfachsender-Mehrfachempfänger-Busleitungen (11a und 11b, 12a und 12b, 13a und 13b) hergestellt wird.

19. Vorrichtung nach einem der Ansprüche 16 bis 18, **dadurch gekennzeichnet, dass** sie zwei redundante Koppelmodule (MC'1, MC'2) aufweist.

20. Vorrichtung nach einem der Ansprüche 16 bis 19, **dadurch gekennzeichnet, dass** der Koppelmodul (MC') eine oder mehrere Nachrichten an einen Modul (M1 bis Mn) nur auf dessen Anforderung sendet.

21. Vorrichtung nach einem der Ansprüche 16 bis 20, **dadurch gekennzeichnet, dass** der Koppelmodul (MC') jedem Modul (M1 bis Mn) einen vordefinierten Zeitabschnitt zuweist, während dem er die von diesem gesendeten Anforderungen verarbeitet.

22. Vorrichtung nach einem der Ansprüche 16 bis 21, **dadurch gekennzeichnet, dass** der Koppelmodul (MC') eine Tabelle (RT') aufweist, die die Verteiladressen für die elementaren Daten anzeigt, die in jeder empfangenen Nachricht enthalten sind.

23. Vorrichtung nach einem der Ansprüche 16 bis 22, **dadurch gekennzeichnet, dass** der Koppelmodul (MC') eine Tabelle (XT') aufweist, die die Adressen der elementaren Daten anzeigt, die jede auf Anforderung zu sendende Nachricht bilden.

## Claims

1. Device for communication between a plurality of functional modules (M1,M2, ... Mn) in a local unit (10) and at least one multi-transmitter, multi-receiver multiplexed external bus (1) of the Ethernet type, for communicating with other local units,
**characterized in that** it comprises:
- at least as many internal buses (4 to 6; 11 to 13) as there are functional modules (M1, M2, ... Mn) of the local unit (10), each internal bus (4 to 6; 11 to 13) being of the multi-transmitter, multi-receiver multiplexed type and complying with the format of the data carried on the external bus (1), said functional modules (M1, M2, ... Mn) being coupled to the internal buses (4 to 6; 11 to 13), each internal bus (4 to 6, 11 to 13) being controlled by only a single functional module (M1, M2, ... Mn); and
- at least one coupling module (MC) designed to transfer the data between the internal buses (4 to 6; 11 to 13) and the external bus (1).

2. Device according to Claim 1, **characterized in that** each module (M1, M2, ... Mn) of the local unit has at least one internal bus (4 to 6) on which it is the sole transmitter, the other modules simply being receivers, an additional internal bus (7) being assigned to each external bus (1) for distributing the data carried on the external bus inside the local unit (10), this distribution bus (7) being of the same type as the internal buses (4 to 6) and being connected to the functional modules (M1, M2, ... Mn) and to the coupling module (MC).

3. Device according to Claim 1 or 2, **characterized in that** each functional module (M1, M2, ... Mn) comprises means for allowing transmission only if all the internal buses of at least one predetermined group of all the internal buses (4 to 6) associated with the modules are free.

4. Device according to Claim 3, **characterized in that** each module (M1, M2, ... Mn) comprises means of waiting for a random length of time before re-attempting transmission, when a plurality of modules of the predetermined group are trying to transmit at the same time.

5. Device according to Claim 3, **characterized in that** each module (M1, M2, ... Mn) is associated with a respective waiting time (Ga to Gd) during which all the internal buses (4 to 6) of the predetermined group must remain free before it can transmit on the internal bus (4 to 6) with which it is associated.

6. Device according to Claim 5, **characterized in that** the transmissions (Xa to Xd) of each module (M1, M2, ... Mn) of the predetermined group on their associated bus (4 to 6) are divided into frames ending with a waiting time (Gt) of predetermined length known to all the modules (M1, M2, ... Mn) of the predetermined group, each module (M1, M2, ... Mn) of the predetermined group being allowed to transmit only once per frame.

7. Device according to Claim 6, **characterized in that** said frames are cyclic, the length of the cycle being known to all the modules of the predetermined group.

8. Device according to one of the preceding claims, **characterized in that** each functional module (M1, M2, ... Mn) comprises a control unit (31) connected to each of the internal buses (4 to 7), designed to sort all the data flowing on the internal buses (4 to 7) so as to receive only the data intended for the module, and to transmit data on the internal bus (4 to 6) assigned in transmission to said module.

9. Device according to Claim 8, **characterized in that** the control unit (31) is connected to non-volatile memories (37, 38) containing the identification and the description of the characteristics of the data to be received and to be transmitted, as well as the sequencing of the data to be transmitted, the control unit (31) comprising means for detecting the data to be received on the internal buses (4 to 7) and for transferring them to an exchange memory (32).

10. Device according to Claim 8 or 9, **characterized in that** the control unit (31) comprises means for monitoring the bus (4 to 6) assigned to transmission, for comparing during their transmission the data transmitted on the bus with the data read simultaneously from the bus, and for invalidating the transmission of the data being transmitted and generating an error signal when the comparison reveals a difference.

11. Device according to one of the preceding claims, **characterized in that** the coupling module (MC) comprises means (41) for recognizing the data flowing on the internal buses (4 to 6) which are to be sent on the external bus (1).

12. Device according to one of the preceding claims, **characterized in that** the coupling module (MC) comprises a first control unit (41), connected to the internal buses (4 to 6) which are not connected to the external bus, a first exchange memory (42), which is connected to the control unit (41), to a processor (45), to a second exchange memory (56) and to a second control unit (48), which is similar to the first (41) and transfers the data from the second exchange memory (56) to the external bus (1a).

13. Device according to one of the preceding claims, **characterized in that** the coupling module (MC) has an internal bus (6) on which it is the sole transmitter, allowing it to send service and maintenance data to the functional modules (M1 to Mn) of the local unit (10), so as to be able to indicate the data transfer faults on the external bus (1a) and possible malfunctions to the functional modules.

14. Device according to one of Claims 2 to 13, **characterized in that** the coupling module (MC) comprises a serial interface circuit (54) which converts the analog signal conveying the data on the external bus (1a) into a logic signal which is applied to the internal distribution bus (7), and vice versa for transferring the data transmitted by the second control unit (48) to the external bus (1a).

15. Device according to one of Claims 11 to 14, **characterized in that** the coupling module (MC) is connected to a second external bus (1b) which is of the same type as the first external bus (1a) and is connected to an internal bus (8) via a second serial interface circuit (55), the processor (45) being connected to a third exchange memory (57) and to a second external bus (1b) via a third control unit (49) and the second serial interface circuit (55).

16. Device according to Claim 1, **characterized in that** each internal bus (11 to 13) of the local unit (10) establishes a link between a respective module (M1, M2, ... Mn) of the local unit and the coupling module (MC').

17. Device according to Claim 1, **characterized in that** each internal bus (11 to 13) of the local unit (10) establishes a two-way link between a respective module (M1, M2, ... Mn) of the local unit and the coupling module (MC').

18. Device according to Claim 17, **characterized in that** the two-way link between each respective module (M1, M2, ... Mn) of the local unit and the coupling module (MC') is produced by two multi-transmitter, multi-receiver buses (11a and 11b, 12a and 12b, 13a and 13b).

19. Device according to one of Claims 16 to 18, **characterized in that** it comprises two redundant coupling modules (MC'1, MC'2).

20. Device according to one of Claims 16 to 19, **characterized in that** the coupling module (MC') transmits one or more messages to a module (M1 to Mn) solely on request by the latter.

21. Device according to one of Claims 16 to 20, **characterized in that** the coupling module (MC') assigns each module (M1 to Mn) a predefined time slot during which it processes the requests transmitted by this module.

22. Device according to one of Claims 16 to 21, **characterized in that** the coupling module (MC') comprises a table (RT') indicating the allocation addresses of the data elements contained in each received message.

23. Device according to one of Claims 16 to 22, **characterized in that** the coupling module (MC') comprises a table (XT') indicating the addresses of the data elements constituting each message to be transmitted on request.
